# FASCICULE DE BREVET EUROPEEN

(11) **EP 1 720 319 B1**
(45) Date de publication et mention de la délivrance du brevet: **03.09.2008**
(21) Numéro de dépôt: 06290647.4
(22) Date de dépôt: 20.04.2006
(51) Int. Cl.: H04L 29/06, H04L 29/14

(54) **Basculement de serveur dans les transmissions de données en temps réel**
Serverumschaltung in Echzeit-Datenübertragungen
Server switch-over in real-time data transmissions

(30) Priorité: 04.05.2005 FR 0504573
(43) Date de publication de la demande: 08.11.2006
(73) Titulaire: GL Trade, 75002 Paris (FR)
(72) Inventeur: Gemon, Richard, 75011 Paris (FR)
(74) Mandataire: Bredema

(56) Documents cités:
- EP-A- 1 198 157
- WO-A-98/49621
- US-B1- 6 490 610

## Description

La présente invention se rapporte au domaine de la transmission de données à travers un ou plusieurs serveurs.

La présente invention se rapporte plus particulièrement à une méthode de sécurisation du flux de données par un mécanisme de détection des problèmes de transmission dans un environnement multi-serveur et à une solution à une telle transmission défectueuse.

L'art antérieur connaît déjà de telles solutions de sécurisation des flux. Le brevet américain US 6,490,610 (Oracle Corporation) décrit par exemple un mécanisme de correction des erreurs de transmission lors de l'accès à des ressources à travers un serveur. En particulier, ce document divulgue un procédé de restitution de flux après le défaut de transmission d'un premier serveur auquel un client était connecté pour accéder à des ressources. Lorsque l'on détecte un tel défaut de connexion, le client est automatiquement connecté à un second serveur ayant accès aux mêmes ressources. Ce mécanisme est par exemple expliqué dans le cas d'une connexion entre un client et un serveur de base de données. Avec ce mécanisme automatique, on évite d'avoir à se reconnecter à la base de données à chaque fois que la transmission avec un premier serveur échoue. Ce mécanisme utilise un marquage de l'état d'une base lors d'une transmission. Ainsi, lorsqu'un client effectue une requête à la base de données, l'état de la base à partir duquel seront transférées les données est transmis en réponse à la requête sous la forme d'une empreinte de temps (timestamp en anglais). La transmission des données est alors réalisée sur la base de cette empreinte. En cas d'échec de la connexion, le client détecte l'échec et envoie l'empreinte à un deuxième serveur pour récupérer les données correspondant à l'empreinte.

On comprend donc que ce mécanisme ne peut fonctionner que si la communication entre la base de données et le client est une communication bidirectionnelle, puisque le client informe la base de l'instant où l'échec a eu lieu.

Dans une communication unidirectionnelle, par exemple comme c'est le cas dans les communications depuis une place boursière, ce mécanisme n'est donc pas possible.

La présente invention entend donc solutionner le problème de la sécurisation des flux dans une transmission unidirectionnelle entre une source de données et un client, via un ensemble de serveurs.

Il faut cependant noter que la solution est également valable dans une transmission bidirectionnelle pour la récupération de données en temps réel.

La présente invention entend donc remédier aux inconvénients de l'art antérieur en permettant ce basculement en temps réel, même si la communication est unidirectionnelle.

Pour ce faire, la présente invention est du type décrit ci-dessus et elle est remarquable, dans son acception la plus large, en ce qu'elle concerne un procédé de sécurisation de flux de données issu d'une source unique via des canaux de transmission différents comprenant au moins un premier serveur et un second serveur, et un filtre pour l'émission en temps réel d'un flux de données unique issu dudit premier serveur vers une station client, comprenant les étapes consistant à :
- pour ledit filtre, détecter une anomalie de diffusion du flux de données issu du premier serveur comprenant les sous-étapes consistant à
   - analyser les données reçues des canaux issus desdits premier et second serveurs;
   - comparer les données issues desdits premier et second serveurs et, si le premier serveur est inactif pendant une durée fixée (S) alors que le second serveur est actif pendant ladite durée fixée (S), basculer vers ledit second serveur, pour l'émission d'un flux de données unique issu dudit second serveur, ladite durée fixée (S) étant au moins égale à la latence la plus longue acceptée entre ledit premier serveur et ledit second serveur,
- émettre les données en temps réel à partir du second serveur.

De préférence, suite au basculement vers ledit second serveur, on fournit les données dudit second serveur au moment du basculement.

En effet, de la sorte, il est possible de garantir l'état des données au moment du basculement, même si elles ne sont pas mises à jour par la suite. Ceci évite donc la perte des données au moment du basculement du premier serveur vers le second serveur.

De préférence, ladite étape de comparaison est réalisée par échantillonnage et par exemple de façon booléenne, selon une période prédéterminée (T) inférieure à ladite durée fixée (S).

Ceci permet en effet une analyse et une comparaison simple des signaux issus des premier et second serveurs.

Le procédé selon l'invention est particulièrement adapté dans le cas où lesdites données sont de type fugitives, n'ayant de pertinence qu'au moment où elles sont transmises, et lorsque ledit flux de données est unidirectionnel de la source de données vers ladite station client.

L'invention concerne également un programme d'ordinateur, éventuellement stocké sur un support de données, pour la mise en oeuvre du procédé selon l'invention.

On comprendra mieux l'invention à l'aide de la description, faite ci-après à titre purement explicatif, d'un mode de réalisation de l'invention, en référence aux figures annexées :
- la figure 1 un exemple d'architecture sur laquelle est mise en oeuvre l'invention selon un premier état.
- La figure 2 est un exemple d'architecture sur laquelle est mise en oeuvre l'invention selon un second état.
- La figure 3 est un exemple d'architecture sur laquelle est mise en oeuvre l'invention selon un troisième état.
- La figure 4 illustre un mode de réalisation de l'invention par comparaison continue et booléenne des signaux des canaux.
- La figure 5 est une représentation de la réception des données selon l'invention illustrant les retards sporadiques.
- La figure 6 est un tableau illustrant les avantages de la fourniture des données du serveur au moment du basculement.

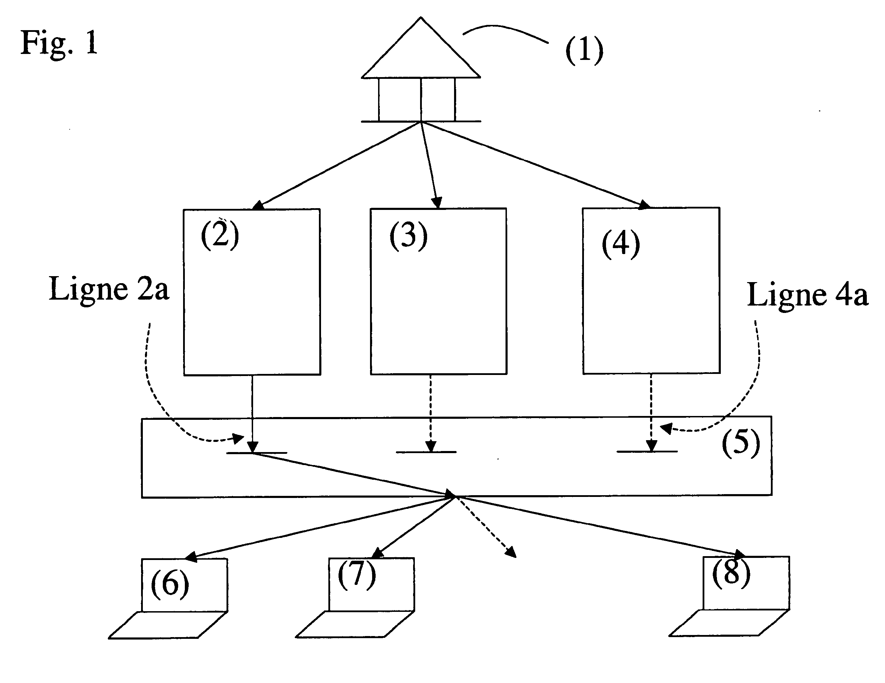

Illustré figure 1, l'architecture selon l'invention comprend un émetteur de ressources 1 sous forme d'un flux de données. Cet émetteur est par exemple un marché boursier, mais l'homme du métier comprendra que l'invention n'est pas limitée à ce type de source, et qu'elle est applicable à tout type de source.

La source 1 est reliée à un ensemble de serveurs 2, 3, 4 par exemple par une liaison unidirectionnelle lorsque aucune donnée ne peut être transmise à la source, en particulier pour des données fugitives n'ayant de pertinence qu'à un instant fixé, c'est-à-dire pour un flux de données continu.

On définit également des lignes de communication issues des serveurs. On considère une ligne dite active pour laquelle le filtre 5 transmet les données reçues du serveur (dit serveur actif) vers les postes clients 6, 7 et 8.

Sur la figure 1, on considère donc que le serveur 2 est actif alors que les serveurs 3 et 4 sont des serveurs de réserve (ou serveurs de backup en anglais) destinés à réaliser le transfert des données en cas de défaillance du serveur 1. La ligne 2a est une ligne active et la ligne 4a est une ligne inactive. Les données issues des lignes inactives sont bloquées par le filtre 5 qui ne les transmet pas vers les postes 6, 7 et 8. Aux fins de la présente demande, on considèrera que les serveurs sont actifs ou en service, lorsqu'ils sont aptes à transmettre les données une fois qu'ils les ont reçues de la source.

Un serveur devient hors service lorsqu'il ne transmet plus les données vers le filtre 5 pendant une période de temps prédéfinie. Le filtre 5 est bien sûr apte à déterminer si il reçoit ou non des données depuis l'un ou l'autre des serveurs.

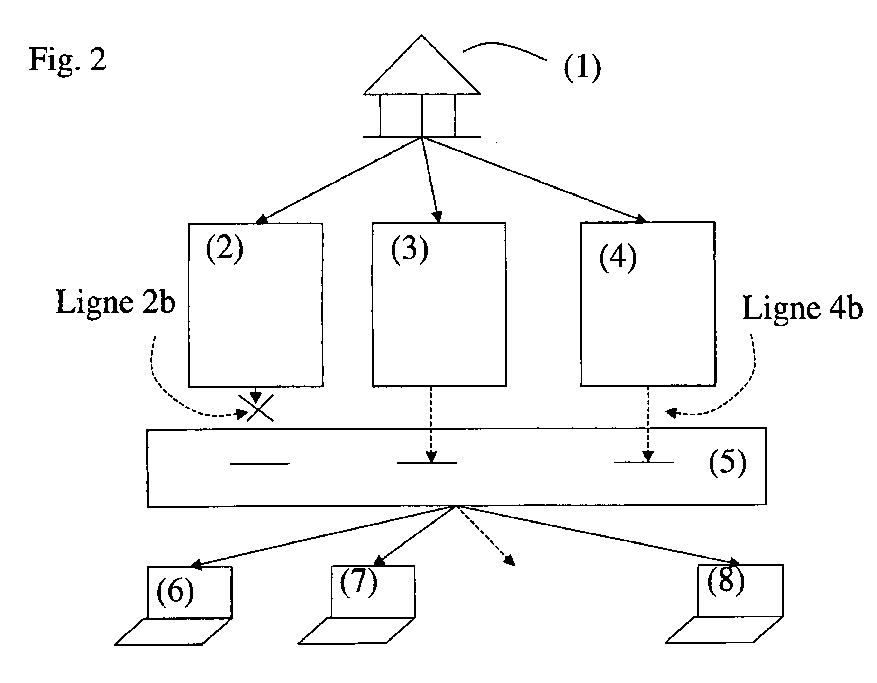

Illustré figure 2, la ligne active 2a de la figure 1 est devenue une ligne hors service 2b par rupture du transfert entre le serveur 2 et le filtre 5.

Selon un mode de réalisation, afin de contrôler la bonne réception du flux de données, un contrôle de réception est réalisé par le filtre 5 par période de temps T.

Pendant ce contrôle, différentes situations sont alors possibles :
Si la ligne active 2a a reçu les données de la source 1, elle reste toujours active (figure 1)
Si la ligne 2a n'a reçu aucune données du serveur 2, elle devient hors service (ligne 2b de la figure 2).

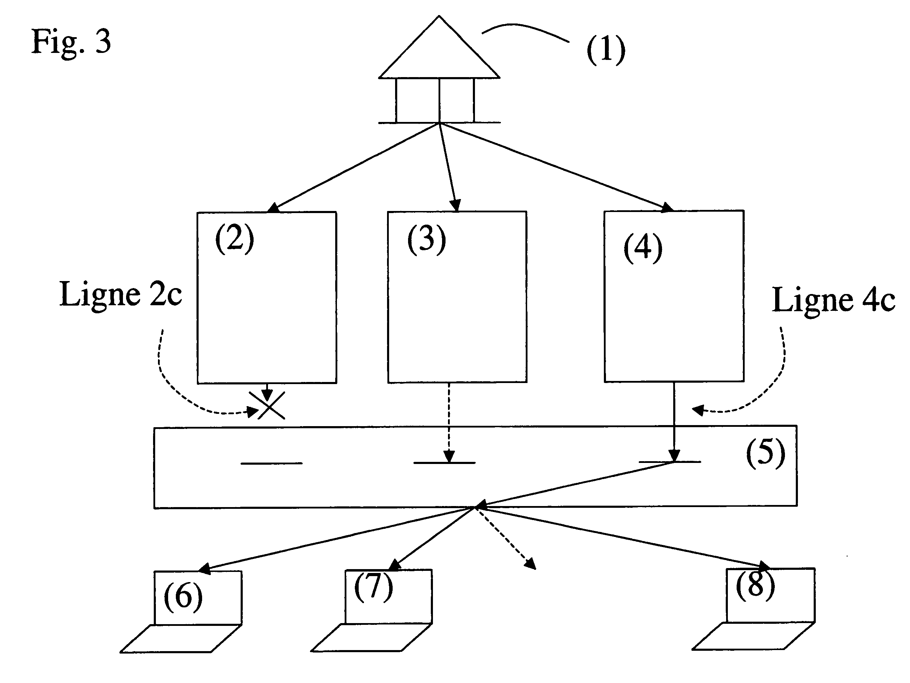

Dans ce cas, s'il existe au moins une ligne de réserve en service (comme la ligne 4b), alors on applique la règle suivante :
Si la ligne active 2a était hors service pendant N périodes de temps T consécutives, et que N atteint un seuil prédéfini de type « Maximum d'inactivité », alors la ligne de réserve la plus prioritaire devient la ligne active (par exemple la ligne 4c associée au serveur 4 sur la figure 3). Dans ce cas, la source 1 reste toujours active, via le serveur 4 comme sur la figure 3. Ceci signifie donc que le filtre 5 transmet les données issues du serveur 4 vers les stations 6, 7, 8, celles du serveur 3 restant bloquée, et la ligne correspondante inactive.
Si le seuil de temps d'inactivité N*T n'est pas atteint, le basculement n'est pas réalisé, et la source reste inactive. On note que le basculement pourra avoir lieu à une période ultérieure lorsque le seuil sera atteint, ou bien la connexion sera rétablie, et le serveur 2 restera le serveur actif.

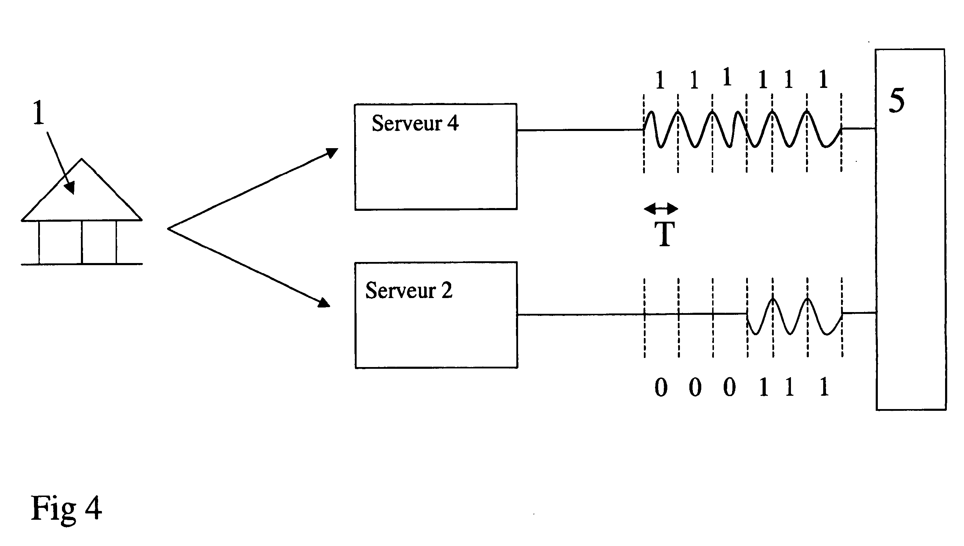

Selon ce mode de réalisation, la comparaison entre les données transmises par les serveurs est donc réalisée de façon booléenne et continue. Illustré figure 4, le filtre 5 analyse et compare les signaux reçus. Il détecte donc que pendant 3 périodes T, le serveur 2 n'émettait pas de données (3 premières valeurs booléennes 0) alors que le serveur 4 émettait des données (trois premières valeurs booléennes 1). Selon le seuil d'inactivité prédéfini, on procèdera alors ou non au basculement du serveur 2 vers le serveur 4. On comprend alors que si N est choisi inférieur ou égal à 3, le basculement sera réalisé, et si N est supérieur strictement à 3, le basculement ne sera pas réalisé.

On note par ailleurs que si la ligne active ne transmet plus de données et qu'aucune autre ligne ne transmet de données (valeurs booléennes 0 selon les deux canaux), on considère que la source ne transmet plus d'information (par exemple si une bourse ne transmet plus pendant une pause), et le basculement n'est pas réalisé.

Afin de déterminer les paramètres de contrôle, on définit d'abord la période d'échantillonnage de contrôle de la réception **SamplingPeriod= T.**

On définit également le délai maximum autorisé à la non-réception **InactivityDelay= S**

On détermine alors le nombre maximal **MaxInacPeriod** de périodes T autorisé à la non-réception, N = Max {n, nT ≤ S, n entier}

Afin de mettre en oeuvre l'invention, on définit alors une liste des numéros de ligne que l'on classe préalablement par ordre décroissant de priorité (par exemple selon la stabilité constatée de certains serveurs ou selon tout autre critère, par exemple la latence moyenne observée). La première ligne classée sera alors initialement la ligne active (la ligne 2a sur la figure 1).

Selon les variantes choisies, il est entendu que l'on peut également définir un paramètre **InactivityDelay** par ligne ou bien choisir un paramètre commun à toutes les lignes, S pouvant valoir par exemple 30 secondes, dans le cas d'une transmission boursière en temps réelle.

Ce procédé est par exemple mis en oeuvre par un compteur de retard de flux qui est incrémenté lorsqu'une ligne n'a pas été alimentée sur une période T et qu'au moins une ligne passive a été alimentée sur la même période. Si le compteur de retard atteint le maximum admis, la ligne active passe à l'état passif puis la ligne passive alimentée sur la période et la plus prioritaire passe active.

Nous avons décrit ici un mode de réalisation dans lequel le temps maximal acceptable pour la différence entre les deux canaux avant basculement est échantillonné selon une période T et déterminé de façon booléenne, mais il doit être entendu que tout type de comparaison peut être effectué entre les données des canaux issus des différents serveurs.

En particulier, on peut comparer directement les signaux sur le temps S, de façon continue, ou selon un échantillonnage variable.

Selon l'invention, il est également important de déterminer les paramètres acceptables dans le cadre d'une transmission de données en temps réel telle qu'une transmission de données de bourse.

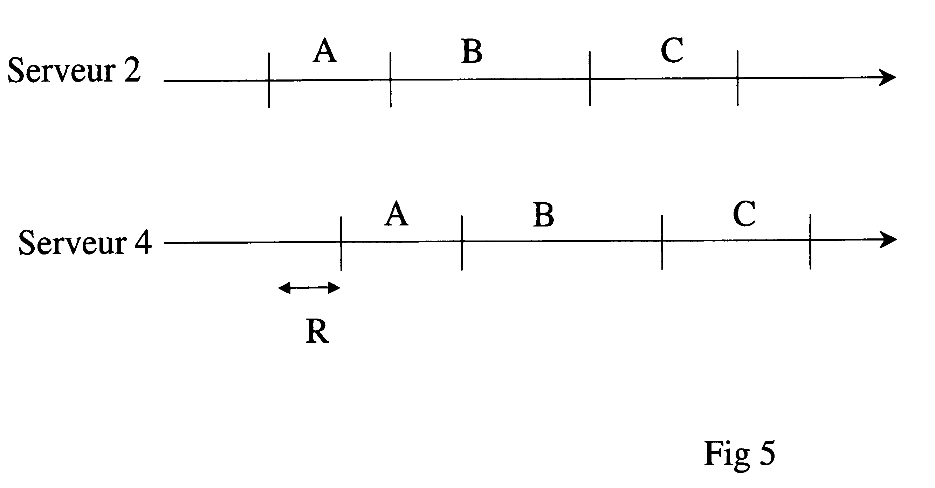

Illustré figure 5, on a représenté un exemple de flux de données reçu par le serveur 2 et par le serveur 4. Il est connu qu'il existe un retard sporadique R, aussi appelé temps de latence, entre ces deux flux, comme illustré sur la figure 5, pour l'émission des trames A, B et C. Ce retard est par exemple dû aux différents traitements des données entre la source et les différents serveurs, ou bien aux traitements au niveau des serveurs. Ainsi, on comprend que si le temps maximal S de différence entre les canaux accepté avant le basculement est trop petit, un basculement sera réalisé alors que cette différence ne sera due qu'au retard sporadique.

On choisit donc le délai maximum autorisé à la non-réception S tel que S soit supérieur ou égal au temps de latence maximum accepté R₀.

Selon le mode de réalisaation dans lequel la comparaison est échantillonnée selon une période T, on choisit donc de basculer lorsque l'analyse booléenne donne N fois la valeur 0 sur une ligne et N fois 1 sur une autre, avec N = Max {n, nT ≤ S, n entier} et S≥ R₀.

Ainsi, un tel choix du paramètre S permet de prendre pleinement en compte les retards de latence entre les flux émis par les différents serveurs.

Après le basculement, le serveur 4 correspond maintenant à la ligne active. Mais il est important de noter que le filtre ne transmettra pas nécessairement la valeur d'une donnée stockée en mémoire au moment du basculement, celle-ci ayant été bloquée avant le basculement.

De préférence, on réalise donc une copie de l'état des données du serveur 4 maintenant actif, au moment du basculement, et cette copie est transmise aux postes clients par le filtre 5.

Suite à cette copie les données de la source sont alors transmises en temps réel par la ligne active de façon régulière.

De la sorte, on garantit donc la valeur correcte des données dans leur état final au moment du basculement, alors qu'en l'absence d'une telle copie, on ne garantit que les données qui seront rafraîchies par la suite.

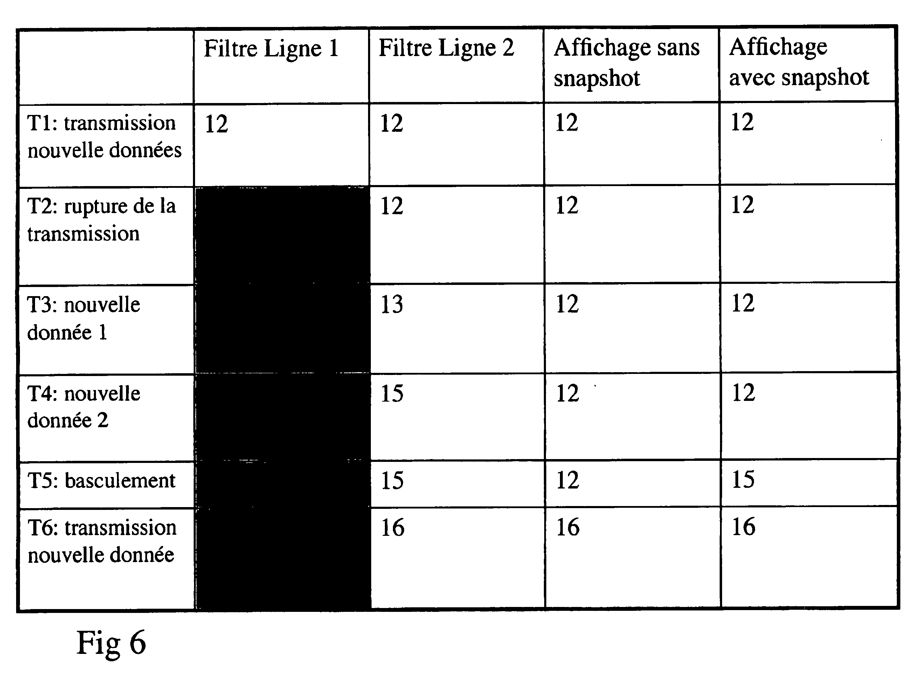

On notera que cette copie peut être importante dans le cas d'une transmission de données boursières. En effet, comme l'illustre le tableau de la figure 6, on considère une ligne active 2, et une ligne initialement inactive 4. Le filtre reçoit donc la valeur 12 des deux serveurs comme c'est visible sur les colonnes 2 et 3 du tableau, et transmet les données du serveur actif 2. L'affichage est alors donné en colonne 3 et 4, et naturellement, il s'affiche la valeur 12 au niveau du poste client.

En cas de rupture de la ligne 2 au temps T2, tant que le basculement n'est pas réalisé, une nouvelle donnée obtenue au temps T3 par la ligne 4 en service n'est alors bien sûr pas affichée et transmise au poste client.

De la même façon une nouvelle donnée obtenue à T4 n'est pas transmise.

Si le basculement a lieu à T5, sans copie de la mémoire du serveur (ou photo de la mémoire), la nouvelle donnée valant 15 n'est pas affichée puisque le filtre a bloqué cette valeur.

Avec une photo de l'état du serveur, la donnée 15 sera transmise et affichée au moment du basculement.

On comprend alors l'importance de ce mode de réalisation si le temps entre le basculement vers la ligne 4 à T5 et l'obtention d'une nouvelle donnée de la ligne 4 à T6 est long. En effet, pendant tout ce temps, l'utilisateur croit que la valeur de la donnée est à 12 (valeur au moment de la rupture de liaison du serveur 2) alors qu'elle est en fait à 15 (valeur au moment du basculement vers le serveur 4).

En matière de données boursière où les données en temps réel sont de la plus autre importance, l'utilisation de la présente invention permet donc de minimiser les pertes d'information pendant les coupures de transmission.

L'invention est décrite dans ce qui précède à titre d'exemple. Il est entendu que l'homme du métier est à même de réaliser différentes variantes de l'invention sans pour autant sortir du cadre du brevet.

## Revendications

1. Procédé de sécurisation de flux de données issu d'une source unique via des canaux de transmission différents comprenant au moins un premier serveur (2) et un second serveur(4), et un filtre (5) pour l'émission en temps réel d'un flux de données unique issu dudit premier serveur vers une station client, comprenant les étapes consistant à :
- pour ledit filtre, détecter une anomalie de diffusion du flux de données issu du premier serveur (2) comprenant les sous-étapes consistant à
• analyser les données reçues des canaux issus desdits premier et second serveurs;
• comparer les données issues desdits premier et second serveurs et, si le premier serveur (2) est inactif pendant une durée fixée (S) alors que le second serveur (4) est actif pendant ladite durée fixée (S), basculer vers ledit second serveur (4), pour l'émission d'un flux de données unique issu dudit second serveur, ladite période de temps fixée étant au moins égale à la latence la plus longue acceptée entre ledit premier serveur et ledit second serveur,
- émettre les données en temps réel à partir du second serveur.

2. Procédé selon la revendication 1, **caractérisé en ce que,** suite au basculement vers ledit second serveur, on fournit les données dudit second serveur au moment du basculement.

3. Procédé selon la revendication 1 ou 2, **caractérisé en ce** ladite étape de comparaison est réalisée par échantillonnage selon une période prédéterminée (T) inférieure à ladite durée fixée (S).

4. Procédé selon la revendication 3, **caractérisé en ce que** ladite comparaison est réalisée de façon booléenne par échantillonnage selon ladite période prédéterminée (T).

5. Procédé selon l'une quelconque des revendications précédentes, **caractérisé en ce que** lesdites données sont de type fugitives, n'ayant de pertinence qu'au moment où elles sont transmises.

6. Procédé selon l'une quelconque des revendications précédentes, **caractérisé en ce que** ledit flux de données est unidirectionnel de la source de données vers ladite station client.

7. Programme d'ordinateur pour la mise en oeuvre du procédé selon l'une quelconque des revendications 1 à 6, **caractérisé en ce qu'**il comprend des instructions pour réaliser lesdits étapes d'analyse et de comparaison.

## Claims

1. A method for protecting a data flow originating from a single source via different transmission channels comprising at least a first server (2) and a second server (4), and a filter (5) for real time transmission of a single data flow originating from said first server to a client station, comprising the following steps:
- for said filter, detecting an anomaly in the broadcasting of the data flow originating from the first server (2) comprising the sub-steps consisting in
• analysing the data received from the channels originating from said first and second servers;
• comparing the data originating from said first and second servers and if the first server (2) is inactive for a fixed period of time (S) whereas the second server (4) is active during said fixed period of time (S), switching to said second server (4), for the transmission of a single data flow originating from said second server, said fixed period of time being at least equal to the longest accepted latency between said first server and said second server,
- real time emitting the data from the second server.

2. A method according to claim 1, **characterised in that** further to the switching to said second server, the data from said second server are supplied upon the switching operation.

3. A method according to claim 1 or 2, **characterised in that** said comparing step is carried out by sampling according to a predetermined period of time (T) smaller than said fixed period of time (S).

4. A method according to claim 3, **characterised in that** said comparison is carried out in a Boolean way through sampling according to said predetermined period of time (T).

5. A method according to any one of the preceding claims, **characterised in that** said data is of the fugitive type and has a pertinence only at the moment of the transmission.

6. A method according to any one of the preceding claims, **characterised in that** said data flow is unidirectional from the source of data towards said client station.

7. Computer program for implementing the method according to any one of claims 1 to 6, **characterised in that** it includes instructions for carrying out said analysing and comparison steps.

## Patentansprüche

1. Sicherungsverfahren eines Datenflusses, der aus einer einzigartigen Quelle stammt, über unterschiedliche Übertragungskanäle, die wenigstens einen ersten Server (2) und einen zweiten Server (4) sowie einen Filter (5) für die Ausgabe eines einzigartigen Datenflusses in Echtzeit umfassen, der aus dem genannten ersten Server stammt, zu einer Client-Station, umfassend die Stufen, die aus Folgendem bestehen:
- für den genannten Filter die Feststellung einer Verteileranomalie des aus dem ersten Server (2) stammenden Datenflusses, der die Unterstufen umfasst, welche aus Folgendem bestehen:
* Analysieren der empfangenen Daten der Kanäle, die aus dem ersten und zweiten Server stammen;
* Vergleichen der Daten, die aus dem genannten ersten und zweiten Server stammen und, wenn der erste Server (2) während einer fixen Dauer (S) inaktiv ist, während der zweite Server (4) während der genannten fixen Dauer (S) aktiv ist, Umschalten zu dem genannten zweiten Server (4) für die Ausgabe eines einzigartigen Datenflusses, der aus dem genannten zweiten Server stammt, wobei die genannte fixe Zeitperiode wenigstens gleich der längsten Latenz ist, die zwischen dem genannten ersten Server und dem genannten zweiten Server akzeptiert wird,
- Ausgabe der Daten in Echtzeit ausgehend von dem zweiten Server.

2. Verfahren gemäß Anspruch 1, **dadurch gekennzeichnet, dass** im Anschluss an das Umschalten zu dem genannten zweiten Server die Daten des genannten zweiten Servers zum Zeitpunkt des Umschaltens geliefert werden.

3. Verfahren gemäß Anspruch 1 oder 2, **dadurch gekennzeichnet, dass** die Vergleichsstufe per Ziehen eines Musters gemäß einer vorbestimmten Periode (T) realisiert wird, die kürzer ist als die genannte fixe Dauer (S).

4. Verfahren gemäß Anspruch 3, **dadurch gekennzeichnet, dass** der genannte Vergleich auf boolesche Weise per Ziehen eines Musters gemäß der genannten vorbestimmten Periode (T) realisiert wird.

5. Verfahren gemäß einem der vorherigen Ansprüche, **dadurch gekennzeichnet, dass** die genannten Daten vom flüchtigen Typ sind, die nur zu dem Zeitpunkt relevant sind, zu dem sie übertragen werden.

6. Verfahren gemäß einem der vorherigen Ansprüche, **dadurch gekennzeichnet, dass** der genannte Datenfluss in eine einzige Richtung der Datenquelle zu der genannten Client-Station gerichtet ist.

7. Computerprogramm für die Umsetzung des Verfahrens gemäß Anspruch 1 bis 6, **dadurch gekennzeichnet, dass** es Anweisungen zur Realisierung der genannten Analyse- und Vergleichsstufen umfasst.
